# EUROPÄISCHE PATENTSCHRIFT

(11) **EP 2 247 085 B1**
(45) Veröffentlichungstag und Bekanntmachung des Hinweises auf die Patenterteilung: **13.02.2019**
(21) Anmeldenummer: 10008437.5
(22) Anmeldetag: 29.10.2001
(51) Int. Cl.: H04M 3/42, H04W 4/14, H04M 15/10

(54) **Verfahren, Vorrichtungen und Softwareprogramme zur Informationsflusserweiterung bei der Übertragung einer Nachricht**
Method, device and software program for expanding the information flow when transferring a message
Procédés, dispositifs et programmes logiciel pour l'agrandissement du flux d'information lors de la transmission d'une information

(30) Priorität: 10.08.2001 EP 01119364
(43) Veröffentlichungstag der Anmeldung: 03.11.2010
(62) Teilanmeldung aus: 01125790.4
(73) Patentinhaber: Siemens Aktiengesellschaft, 80333 München (DE)
(72) Erfinder: Laumen, Josef, 85375 Neufahrn bei Freising (DE); Schmidt, Andreas, 38124 Braunschweig (DE); Trauberg, Markus, 38159 Velchede (DE); Van Niekerk, Sabine, 82008 Unterhaching (DE)

(56) Entgegenhaltungen:
- WO-A1-01/37537
- "Digital cellular telecommunications system (Phase 2+) (GSM); Universal Mobile Telecommunications System (UMTS); Mobile radio interface layer 3 Supplementary services specification; General aspects (3GPP TS 24.010 version 4.0.0 Release 4); ETSI TS 124 010", TECHNICAL SPECIFICATION, EUROPEAN TELECOMMUNICATIONS STANDARDS INSTITUTE (ETSI), 650 ROUTE DES LUCIOLES, SOPHIA ANTIPOLIS CEDEX, F-06921, FRANCE, vol. 3-CN3;3-CN4, no. V4.0.0, 1 March 2001 (2001-03-01), XP014007955,

## Beschreibung

Die Erfindung betrifft ein Verfahren zur Informationsflusserweiterung bei der Übertragung einer Nachricht, insbesondere einer Multimedia-Nachricht, über ein Mobilfunknetz, insbesondere UMTS-Netz, entsprechende Vorrichtungen und entsprechende Softwareprogramme.

Das Mobilfunksystem GSM (GSM - Global System for Mobile Communications) bietet neben der Sprachtelefonie auch die Möglichkeit, kurze Textnachrichten von bis zu 160 Zeichen Länge zu versenden bzw. zu empfangen. Dieser Dienst heißt SMS (SMS - Short Message Service). Genaueres findet sich in der GSM 03.40 Version 7.4.0, Release 1998; Digital Cellular Telecommunications System; Technical Realisation of the Short Message Service (SMS).

Für das Mobilfunksystem der nächsten Generation UMTS (UMTS - Universal Mobile Telecommunications System) wird zur Zeit eine multimediafähige Variante eines mobilen Nachrichtendienstes standardisiert, der sogenannte MMS (MMS - Multimedia Messaging Service), s. 3GPP TS 22.140 Version 4.1.0, Release 4; Third Generation Partnership Project; Technical Specification Group Services and System Aspects; Service Aspects; Stage 1; Multimedia Messaging Service (MMS), sowie 3GPP TS 23.140 Version 4.3.0, Release 4; Third Generation Partnership Project; Technical Specification Group Terminals; Multimedia Messaging Service (MMS); Functional Description; Stage 2.

Nachrichten mit multimedialen Inhalten werden im Folgenden zur besseren Abgrenzung von den Textnachrichten des SMS nur noch kurz MMs (MM - Multimedia Message; das Endungs-s steht für den Plural) genannt. Im Gegensatz zum SMS entfällt die Beschränkung auf reine Textinhalte. Beim MMS wird es möglich sein, Texte dem individuellen Geschmack entsprechend zu formatieren, sowie Audio- und Videoinhalte in eine Nachricht einzubetten.

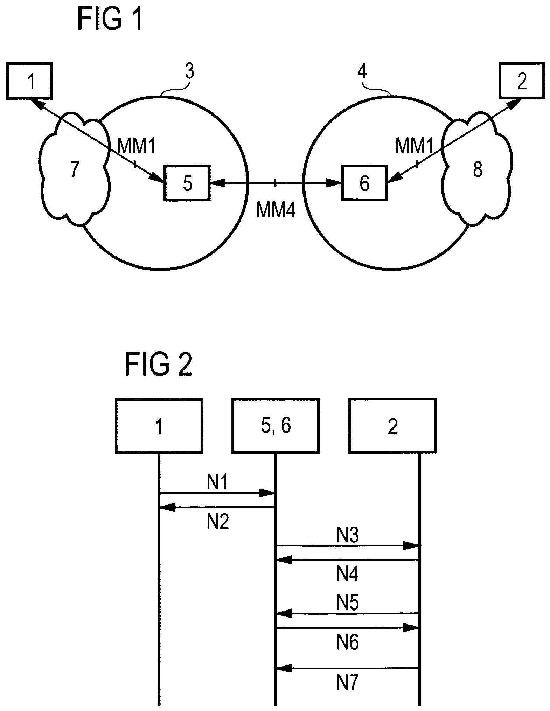

In Fig. 1 ist die MMS Netzwerk-Architektur nach heutigem Stand der Technik aus Sicht von 3GPP (Third Generation Partnership Project) dargestellt. Unter einem MMS User Agent (abgekürzt: UA; Mehrzahl: UAs) versteht man eine Applikation beispielsweise auf einem Mobilfunktelefon oder auf einem an ein Mobilfunktelefon angeschlossenen Gerät (z.B. Laptop, o.ä.), die MMS realisiert. Die Applikation, von der eine Nachricht ausgesendet wird, wird im Folgenden als Sendeapplikation bezeichnet, im speziellen MMS Agent A (hier abgekürzt mit UAA), die empfangende Applikation als Empfangsapplikation, im speziellen MMS User Agent B (hier abgekürzt mit UAB). Gemäß der Fig. 1 wird von einer Sendeapplikation UAA 1 über ein Funknetzwerk 7 unter Ausnutzung einer mit MM1 bezeichneten Luftschnittstelle eine MM zur mit MMS Relay/Server A (hier abgekürzt mit RSA; im weiteren wird MMS Relay/Server mit RS abgekürzt, Plural: RSs) bezeichneten Netzwerkeinheit 5 geschickt, der den UAs im Zuständigkeitsbereich eines MMS Dienstanbieters 3 (MMS Service Provider), dem sogenannten MMSE (MMSE - Multimedia Messaging Service Environment), die MMS-Funktionalität zur Verfügung stellt. Über eine Schnittstelle MM4 wird dann die Nachricht an eine mit MMS Relay/Server B (abgekürzt RSB) bezeichnete Netzwerkeinheit 6 im Zuständigkeitsbereich eines empfangsseitigen MMS Dienstanbieters 4 (MMS Service Providers B) weiter übermittelt, der wiederum über ein Funknetzwerk 8 unter Verwendung einer Schnittstelle MM1 die Nachricht an die Empfangsapplikation UAB 2 übermittelt.

In der Fig. 1 ist der allgemeine Fall dargestellt, dass die sendeseitige Netzwerkeinheit RSA 1 und die empfangsseitige Netzwerkeinheit RSB 2 nicht identisch sind. Der spezielle Fall nur eines involvierten MMSE ist jedoch auch im Stand der Technik bekannt, ebenso wie die Tatsache, dass die Schnittstelle MM1 nicht zwangsläufig als Luftschnittstelle ausgebildet zu sein braucht.

Ein in der obigen Spezifikation 3GPP TS 23.140 Version 4.3.0, Release 4, beschriebenes Merkmal des MMS für den erwähnten speziellen Fall der Identität von sende- und empfangsseitigem RSs ist die sogenannte Antwortvergebührung, die i.a. mit Reply-Charging bezeichnet wird und gemäß welcher ein Absender beim Abschicken einer MM seine Bereitschaft äußern kann, die Kosten für eine Antwort-Nachricht, insbesondere eine Multimedia-Antwort (Antwort-MM), vom Empfänger zu übernehmen. Dabei kann zusätzlich auch eine Frist vom Absender angegeben werden. Liegt eine MM mit entsprechender Antwortvergebührung-Kennzeichnung auf dem Netzwerkelement RS für den Empfänger zum Herunterladen bereit, so wird dieser zunächst benachrichtigt und kann daraufhin die MM auf sein Endgerät herunterladen. Hierbei wird er sowohl in der Benachrichtigung als auch beim Herunterladen der MM darüber informiert, dass eine Antwort-Nachricht auf diese sogenannte Original-MM für ihn kostenfrei ist. Möchte er davon Gebrauch machen, muss er lediglich eine auf seinem Endgerät zusammengestellte MM als Antwort-MM auf die zuvor empfangene Original-MM kennzeichnen und abschicken. Die Antwortvergebührung-Funktionalität ist bisher nur innerhalb eines MMSEs definiert. Eine ausführliche Beschreibung findet sich in Anhang E von 3GPP TS 23.140 Version 4.3.0, Release 4.

Alle für den Transport einer MM benötigten Informationen werden ebenso wie die ergänzenden Informationen für die Antwortvergebührung-Funktionalität als Informationselemente, sog. Information Elements, in die in 3GPP TS 23.140 Version 4.3.0, Release 4 definierten Abstrakten Nachrichten, die sog. abstract messages, eingetragen. Erkennt ein am Datenaustausch beteiligtes Gerät (Applikation UA oder Netzwerkelement RS) ein Informationselement nicht, so wird dieses unverändert durchgereicht. Dieses Verhalten kann für die Antwortvergebührung-Funktionalität problematisch sein, denn die oben beschriebene Antwortvergebührung-Funktionalität nach Stand der Technik funktioniert nur dann, wenn alle am Datenaustausch beteiligten Geräte (also beide UAs und der RS) die Antwortvergebührung-Funktionalität unterstützen. Wenn beispielsweise nur die Sendeapplikation UAA und die Empfangsapplikation UAB die Antwortvergebührung-Funktionalität unterstützen und das beteiligte Netzwerkelement RS nicht (weil er vielleicht eine veraltete MMS-Version unterstützt), kann eine Antwort-MM vom Netzwerkelement RS nicht erkannt und gegebenenfalls auch nicht abgewiesen werden, d.h. der Absender der Antwort-MM (= Empfänger der Original-MM) wird irrtümlich in dem Glauben gelassen, dass die Kosten der von ihm verschickten Antwort-MM vom Empfänger (= Absender der Original-MM) übernommen werden.

In den Standardisierungsgremien 3GPP und WAP Forum ist weder eine Lösung für das oben beschriebene Kompatibilitätsproblem (Netzwerkelement RS unterstützt Antwortvergebührung-Funktionalität nicht), noch für das Ausweiten der Antwortvergebührung-Funktionalität auf mehrere MMSEs bekannt.
eine Anforderung einer bestimmten Funktionalität einer beteiligten Netzwerkeinheit im Zuständigkeitsbereich eines Dienstanbieters enthält, bedienerfreundlicher zu gestalten.

Diese Aufgabe wird hinsichtlich des Verfahrens gelöst durch die Merkmale des unabhängigen Anspruchs 1.

Das im Stand der Technik auftretende Kompatibilitätsproblem wird erfindungsgemäß dadurch gelöst, dass der Absender generell die Möglichkeit erhält, eine maximale Grenze für die Größe einer Antwort-Nachricht bei der Antwortvergebührung anzugeben. Dies kann beispielsweise durch mehrere Obergrenzen realisiert werden, von denen der Absender der Original-Nachricht eine auswählt. Alternativ kann der Absender eine selbst gewählte maximale Größe der Antwort-Nachricht bestimmen. Der Absender erhält damit die Sicherheit, dass die Antwort-Nachricht nicht mehr Kosten verursacht, als vom Absender selbst gewählt.

Teil der Erfindung sind neben den Verfahren auch die entsprechenden beteiligten Vorrichtungen, also die Netzwerkeinheiten mit den entsprechenden Steuereinheiten sowie die Mobilfunkteilnehmergeräte, die mit den entsprechenden Empfangs- und/oder Sendeapplikationen ausgestattet sind. Hierbei ist es - wie oben schon ausgeführt - unerheblich, ob diese Applikationen direkt auf einem Mobilfunktelefon oder einem Laptop, Notebook o.ä. installiert sind. Der Begriff "Mobilfunkteilnehmergerät" umfasst auch diese Ausführungsformen. Zudem sind auch die entsprechenden Softwareprogramme Teil der Erfindung.

Vorteilhafte Weiterbildungen der Erfindung sind in den Unteransprüchen angegeben.

Im Folgenden wird die Erfindung anhand der Figuren näher erläutert. Es zeigen:
Fig. 1 die MMS Netzwerk-Architektur nach den Spezifikationen des 3GPP; rell die Möglichkeit erhält, eine maximale Grenze für die Größe einer Antwort-Nachricht bei der Antwortvergebührung anzugeben. Dies kann beispielsweise durch mehrere Obergrenzen realisiert werden, von denen der Absender der Original-Nachricht eine auswählt. Alternativ kann der Absender eine selbst gewählte maximale Größe der Antwort-Nachricht bestimmen. Der Absender erhält damit die Sicherheit, dass die Antwort-Nachricht nicht mehr Kosten verursacht, als vom Absender selbst gewählt.

Teil der Erfindung sind neben den Verfahren auch die entsprechenden beteiligten Vorrichtungen, also die Netzwerkeinheiten mit den entsprechenden Steuereinheiten sowie die Mobilfunkteilnehmergeräte, die mit den entsprechenden Empfangs- und/oder Sendeapplikationen ausgestattet sind. Hierbei ist es - wie oben schon ausgeführt - unerheblich, ob diese Applikationen direkt auf einem Mobilfunktelefon oder einem Laptop, Notebook o.ä. installiert sind. Der Begriff "Mobilfunkteilnehmergerät" umfasst auch diese Ausführungsformen. Zudem sind auch die entsprechenden Softwareprogramme Teil der Erfindung.

Vorteilhafte Weiterbildungen der Erfindung sind in den Unteransprüchen angegeben.

Im Folgenden wird die Erfindung anhand der Figuren näher erläutert. Es zeigen:
Fig. 1 die MMS Netzwerk-Architektur nach den Spezifikationen des 3GPP;
Fig. 2 das Transaktionsflussdiagramm für den Fall des Versendens einer MM von einer Sendeapplikation (UAA) an eine Empfangsapplikation (UAB) unter Beteiligung nur eines Netzwerkelements RS;
Fig. 3 das Transaktionsflussdiagramm für den Fall des Versendens einer MM von einer Sendeapplikation (UAA) an eine Empfangsapplikation (UAB) unter Beteiligung zweier Netzwerkelemente (RSs), und
Fig. 4 das Transaktionsflussdiagramm im WAP für den Fall des Versendens einer MM von einer Sendeapplikation (CA) an eine Empfangsapplikation (CB) unter Beteiligung zweier Netzwerkelemente (PRs).

Im Folgenden wird beispielhaft anhand der speziellen Funktionalität "Antwortvergebührung" bzw. "Reply-Charging" beschrieben, wie durch den Austausch zusätzlicher Informationen auf der Schnittstelle MM1 das oben angesprochene Kompatibilitätsproblem innerhalb eines MMSEs beseitigt werden kann (Fall 1). Anschließend wird eine Erweiterung des vorgestellten Verfahrens auf den allgemeinen Fall vorgestellt, bei dem MMs zwischen zwei verschiedenen MMSEs unterschiedlicher MMS Dienstanbieter ausgetauscht werden (Fall 2). Von Veränderungen ist hierbei neben der Schnittstelle MM1 auch die Schnittstelle MM4 betroffen. Abschließend wird eine mögliche Realisierung des im allgemeinen Fall 2 beschriebenen Verfahrens (Austausch von MMs zwischen zwei MMSEs) für die als Luftschnittstelle ausgebildete Schnittstelle MM1 in WAP (WAP - Wireless Application Protocol) vorgestellt.

### I. Fall 1: Antwortvergebührung innerhalb eines einzigen MMSE

Zunächst wird anhand der Fig. 2 der Fall betrachtet, daß sowohl die Sendeapplikation UAA 1 (MMS User Agent A) als auch die Empfangsapplikation UAB 2 (MMS User Agent B), den MMS vom gleichen MMS Dienstanbieter in Anspruch nehmen, d.h. die MM wird nur innerhalb eines MMSE transportiert. Fig. 2 zeigt das dazugehörige sogenannte Transaktionsflußddiagramm nach 3GPP, in dem die in 3GPP TS 23.140 version 4.3.0, Release 4 definierten Abstrakten Nachrichten dargestellt sind. Benutzer A erstellt eine MM, kennzeichnet diese mit "Reply-Charging" und verschickt sie mittels der Abstrakten Nachricht N1 (*MM1_submit.REQ*) über die Schnittstelle MM1 an das Netzwerkelement RS im MMSE seines MMS Dienstanbieters. Dieser RS ist gleichzeitig sende- wie empfangsseitiges Netzwerkelement und ist daher mit den beiden Bezugszeichen 5 und 6 gekennzeichnet (vgl. Fig. 1). Das Netzwerkelement RS 5, 6 bestätigt den korrekten Empfang der MM von der Sendeapplikation UAA 1 mit der Abstrakten Nachricht N2 (*MM1_submit.RES*) und benachrichtigt den Empfänger B über die zum Herunterladen bereitliegende MM mit der Abstrakten Nachricht N3 (*MM1_notification.REQ).* Die Abstrakte Nachricht N4 (*MM1_notification.RES*) dient lediglich als Bestätigung für den korrekten Empfang der Benachrichtigung durch die Empfangsapplikation UAB 2. Mit der Abstrakten Nachricht N5 (*MM1_retrieve.REQ*) kann Benutzer B das Herunterladen einer auf dem Netzwerkelement RS 5, 6 bereitliegenden MM initiieren. Das Zustellen der MM vom Netzwerkelement RS 5, 6 an die Empfangsapplikation UAB 2 erfolgt mittels der Abstrakten Nachricht N6 (*MM1_retrieve.RES*). Die Bestätigung hierfür erfolgt anschließend mittels der Abstrakten Nachricht N7 (MM1_acknowledgement.REQ).

Erfindungsgemäß werden von einem Netzwerkelement RS die beiden Abstrakten Nachrichten N3 (*MM1_notification.REQ* = Benachrichtigung über eine MM) und/oder N6 (*MM1_retrieve.RES* = Zustellung der MM) um ein weiteres Informationselement ergänzt, wenn das Netzwerkelement RS die geforderte Antwortvergebührung-Funktionalität unterstützt. Das neue Informationselement könnte beispielsweise "Reply-Charging-Support" heißen. Es gibt Aufschluss darüber, ob das Netzwerkelement RS (oder allgemeiner: der MMS Dienstanbieter) die Antwortvergebührung-Funktionalität unterstützt. Die Tabellen 1 und 2 zeigen die erfindungsgemäßen Zusätze, d.h. das neue Informationselement "Reply-Charging-Support", in den Abstrakten Nachrichten N3 (*MM1_notification.REQ*) und N6 (*MM1_retrieve.RES*), das in beiden Fällen vorzugsweise hinter das bekannte Informationselement "Reply-Charging" eingefügt wird.

**Tab. 1: Zusätzliches Informationselement in den Abstrakten Nachricht N3 (MM1_notification.REQ) und N6 (MM1_retrieve.RES) gemäß Fall 1.**

| **Informationselement** | **Anwesenheit** | **Beschreibung** |
|---|---|---|
| "Reply-Charging-Support" | Optional | Information, dass der MMS Dienstanbieter die Antwortvergebührung-Funktionalität unterstützt. |

Ein Netzwerkelement RS, der die geforderte Antwortvergebührung- Funktionalität nicht unterstützt, reicht bevorzugt weiterhin alle für ihn unbekannten Informationselemente unverändert durch, ohne das Informationselement "Reply-Charging-Support" zu ergänzen. Die Empfangsapplikation UAB des Empfängers kann auf diese Weise erkennen, ob die Antwortvergebührung-Funktionalität im MMSE seines MMS Dienstanbieters unterstützt wird oder nicht und dementsprechend reagieren. Mit anderen Worten: Nur wenn das vom Netzwerkelement RS gesetzte Informationselement "Reply-Charging-Support" in den Abstrakten Nachrichten N3 (*MM1_notification.REQ*) und/oder N6 (*MM1_retrieve.RES*) vorhanden ist, kann sich der Empfänger der Original-MM beim Abschicken einer entsprechend gekennzeichneten Antwort-MM sicher sein, dass die Antwortvergebührung-Funktionalität vom MMS Dienstanbieter unterstützt wird.

Um den Komfort der Antwortvergebührung-Funktionalität zu erhöhen, wird das oben neu definierte Informationselement "Reply-Charging-Support" vorzugsweise auch in die Abstrakte Nachricht N2 (*MM1_submit.RES*) eingefügt, mit welcher der korrekte Empfang einer MM nach dem Absenden vom Netzwerkelement RS bestätigt wird (siehe Fig. 2). Auf diese Weise kann der Sendeapplikation UAA 1 nach dem Abschicken einer Original-MM mit Antwortvergebührung-Kennung ebenso wie die Empfangsapplikation UAB 2 nach dem Abschicken einer Antwort-MM mit entsprechender Kennzeichnung darüber informiert werden, ob der MMS Dienstanbieter die geforderte Antwortvergebührung-Funktionalität unterstützt oder nicht. Tabelle 2 zeigt das zusätzliche Informationselement "Reply-Charging-Support" für die Abstrakte Nachricht N2 (*MM1_submit.RES*), das vorzugsweise hinter das bekannte Informationselement "Message ID" eingefügt wird.

**Tab. 2: Zusätzliches Informationselement in der Abstrakten Nachricht N2 (MM1_submit.RES) gemäß Fall 1.**

| **Informationselement** | **Anwesenheit** | **Beschreibung** |
|---|---|---|
| "Reply-Charging-Support" | Optional | Information, dass der MMS Dienstanbieter die Antwortvergebührung-Funktionalität unterstützt. |

### II. Fall 2: Antwortvergebührung zwischen zwei unterschiedlichen MMSEs

Im Folgenden wird der Fall betrachtet, dass die Sendeapplikation UAA und die Empfangsapplikation UAB den MMS von unterschiedlichen MMS Dienstanbietern in Anspruch nehmen, d.h. eine MM mit Antwortvergebührung-Kennung wird zwischen zwei MMSEs transportiert. Eine Antwortvergebührung funktioniert in diesem Fall nur dann einwandfrei, wenn neben der Sende- und Empfangsapplikation sowohl das Netzwerkelement RSA des Absenders als auch das Netzwerkelement RSB des Empfängers die Antwortvergebührung-Funktionalität unterstützen. Das Kompatibilitätsproblem bei der Antwortvergebührung zwischen verschiedenen MMSEs wird hierbei erfindungsgemäß ermöglicht, indem zusätzliche Informationen beim Transport einer MM mit übertragen werden, die Aufschluss darüber geben, ob die Antwortverge-bührung-Funktionalität vom entsprechenden Netzwerkelement (RSA, RSB) unterstützt wird.

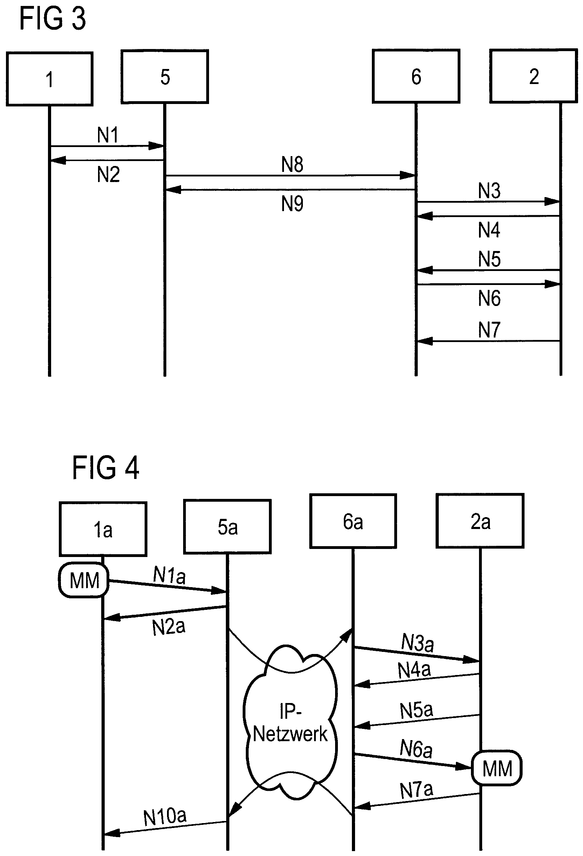

Fig. 3 zeigt eine entsprechende Erweiterung des Transaktionsflussdiagramms von Fig. 2. Zusätzlich zu den dort dargestellten Abstrakten Nachrichten sind hier auch die Abstrakten Nachrichten für die Schnittstelle MM4 (vergleiche auch Fig. 1) dargestellt.

Gemäß der Fig. 3 erstellt Benutzer A eine MM, kennzeichnet diese mit "Reply-Charging" und verschickt sie über die Schnittstelle MM1 an das Netzwerkelement RSA 5 im MMSE seines MMS Dienstanbieters A. Falls dieser die geforderte Antwortvergebührung-Funktionalität unterstützt, leitet erfindungsgemäß das Netzwerkelement RSA 5 in der Abstrakten Nachricht N8 (*MM4_forward.REQ*) - auf die Nachricht N9 (*MM4_forward.RES*) in der Fig. 3 braucht vorliegend nicht eingegangen werden - zusammen mit der MM folgende Informationen an das Netzwerkelement RSB 6 im MMSE des Empfängers weiter:
1. die Bereitschaft des Absenders, die Kosten für eine Antwort-MM vom Empfänger zu übernehmen (Informationselement "Reply-Charging"),
2. eine Frist für das Abschicken einer kostenlosen Antwort-MM (Informationselement "Reply-Charging-Deadline"),
3. die maximale Größe für eine Antwort-MM (Informationselement "Reply-Charging-Size"),
4. die Information, dass bzw. ob der MMS Dienstanbieter des Absenders die geforderte Antwortvergebührung-Funktionalität unterstützt (Informationselement mit dem beispielhaften Namen "Reply-Charging-Support-At-Originator-MMSE"),
   oder (falls es sich bei der übertragenen MM um eine Antwort-MM handelt; in diesem Fall gilt die Antwort-MM als eine neue Original-MM):
5. die Message-ID der (ursprünglichen) Original-MM (Informationselement "Reply-Charging-ID").

Tabelle 3 zeigt die erfindungsgemäß zusätzlichen Informationselemente in der Abstrakten Nachricht N8 (*MM4_forward.REQ*), wobei das neue Informationselement "Reply-Charging-ID" vorzugsweise hinter das bekannte Informationselement "Message ID" und die anderen vier neuen Informationselemente hinter das bekannte Informationselement "Content" eingefügt werden.

**Tab. 3: Zusätzliche Informationselemente in der Abstrakten Nachricht N8 (MM4_forward.REQ) gemäß Fall 2.**

| **Informationselement** | **Anwesenheit** | **Beschreibung** |
|---|---|---|
| "Reply-Charging-ID" | Optional | Im Falle der Antwortvergebührung ist dies die Identifikation der Original-MM, auf die geantwortet wird. |
| "Reply-Charging" | Optional | Information, dass die Antwort auf diese spezifische Original-MM gebührenfrei ist. |
| "Reply-Charging-Deadline" | Optional | Im Falle der Antwortvergebührung der letzte Zeitpunkt der Aufgabe einer Antwort, die dem Empfänger zugestanden wird. |
| "Reply-Charging-Size" | Optional | Im Falle der Antwortvergebührung die maximale Größe einer Antwort-MM, die dem Empfänger zugestanden wird. |
| "Reply-Charging-Support-at-Originator-MMSE" | Optional | Information, dass die Antwortvergebührung-Funktionalität vom sendeseitigen Netzwerkelement (RS) unterstützt wird. |

Die in Tabelle 3 nicht aufgeführten Informationselemente "Reply-Charging", "Reply-Charging-Deadline" und "Reply-Charging-ID" müssen an dieser Stelle nicht neu definiert werden. Sie kommen bekannntermaßen bereits auf der Schnittstelle MM1 zur Anwendung und werden hier erfindungsgemäß auf die neue Schnittstelle MM4 übertragen. Auf das Informationselement "Reply-Charging-Support-at-Originator-MMSE" wird im Folgenden näher eingegangen:
Die Übernahme des oben im Fall 1 definierten Informationselements "Reply-Charging-Support" zur Übermittlung der Information, dass bzw. ob der MMS Dienstanbieter die geforderte Antwortvergebührung-Funktionalität unterstützt, ist für den hier beschriebenen Fall nicht mehr hinreichend, denn das Netzwerkelement RSB 6 würde das vom Netzwerkelement RSA 5 gesetzte Informationselement "Reply-Charging-Support" unverändert bei der Benachrichtigung bzw. Zustellung der MM an die Empfangsapplikation UAB 2 weiterreichen, wenn er die Antwortvergebührung-Funktionalität nicht unterstützt. Dieses Verhalten könnte von der Empfangsapplikation UAB 2 falsch interpretiert werden. Er benötigt die Information, dass bzw. ob beide an der Übertragung der MM beteiligten Netzwerkelemente 5, 6 (RSA, RSB) die geforderte Antwortvergebührung-Funktionalität unterstützen. Aus diesem Grund wird erfindungsgemäß auf der Schnittstelle MM4 zwischen Netzwerkelement RSA 5 und Netzwerkelement RSB 6 ein anderes Informationselement als auf der Schnittstelle MM1 zwischen Netzwerkelement RSB 6 und Empfangsapplikation UAB 2 definiert. Die beiden neuen Informationselemente könnten beispielsweise "Reply-Charging-Support-at-Originator-MMSE" (Antwortvergebührung-Unterstützung auf Seiten des sendeseitigen MMSE) und "Reply-Charging-Support-at-Recipient-MMSE" (Antwortvergebührung-Unterstützung auf Seiten des empfangsseitigen MMSE) heißen. Sie sind in den Tabellen 3, 5 und 6 dargestellt. In den Abstrakten Nachrichten N3 (Tab. 5) und N6 (Tab. 6) ist das Informationselement "Reply-Charging-Support-at-Recipient-MMSE" vorzugsweise hinter das Informationselement "Reply-Charging" eingefügt.

Wenn das Netzwerkelement RSB die Antwortvergebührung-Funktionalität unterstützt, muss dieser vor der Benachrichtigung des Empfängers bzw. vor der Zustellung der MM überprüfen, ob in der Abstrakten Nachricht N8 (*MM4_forward.REQ*) das entsprechende Informationselement "Reply-Charging-Support-at-Originator-MMSE" enthalten ist. Ist dies der Fall, so muss der das Netzwerkelement RSB nun seinerseits das entsprechende Informationselement "Reply-Charging-Support-at-Recipient-MMSE" in die Abstrakte Nachricht N3 (*MM1_notification.REQ* = Benachrichtigung über die zum Herunterladen bereitliegende MM) bzw. in die Abstrakte Nachricht N6 (*MM1_retrieve.RES* = Zustellung der MM) einfügen. Optional kann er das vom Netzwerkelement RSA gesetzte Informationselement "Reply-Charging-Support-at-Originator-MMSE" nach erfolgter Überprüfung auch wieder löschen, wenn und soweit er es erkennen kann, um die kostbare Luftschnittstelle zu entlasten. Die Empfangsapplikation UAB des Empfängers kann mit diesem Verfahren durch Auswertung der Existenz oder Abwesenheit des Informationselements "Reply-Charging-Support-at-Recipient-MMSE" auf einfache Art und Weise erkennen, ob das Abschicken einer Antwort-MM auf die Original-MM von beiden beteiligten MMS Dienstanbietern bearbeitet werden kann oder nicht.

Das Informationselement "Reply-Charging-Size", das die zulässige Größe der Antort-MM bezeichnet, ist ebenfalls Gegenstand dieser Erfindungsmeldung. Es wird bevorzugt in den Abstrakten Nachrichten N1 (*MM1_submit.REQ*), N8 (*MM4_forward.REQ*), N3 (*MM1_notification.REQ*) und N6 (*MM1_retrieve.RES*) ergänzt, um den Komfort der Antwortvergebührung-Funktionalität zu erhöhen. Mit diesem neuen Informationselement hat der Absender einer Original-MM die Möglichkeit, neben der zeitlichen Frist für die Antwort-MM auch deren maximale Größe festzulegen. Alternativ oder in Ergänzung dazu könnte es aber auch von einem der an der Übertragung der MM beteiligten MMS Dienstanbieter benutzt werden, um die Größe einer Antwort-MM einzuschränken. In den Tabellen 3 bis 6 ist das neu definierte Informationselement "Reply-Charging-Size" in den entsprechenden Abstrakten Nachrichten dargestellt, wobei dieses Informationselement in den Abstrakten Nachrichten N1, N3 und N6 vorzugsweise jeweils hinter dem bekannten Informationselement "Reply-Deadline" eingefügt ist.

**Tab. 4: Zusätzliches Informationselement in der Abstrakten Nachricht N1 (MM1_submit.REQ).**

| **Informationselement** | **Anwesenheit** | **Beschreibung** |
|---|---|---|
| "Reply-Charging-Size" | Optional | Im Falle der AntwortVergebührung die maximale Größe einer Antwort-MM, die dem Empfänger zugestanden wird. |

**Tab. 5: Zusätzliche Informationselemente in der Abstrakten Nachricht N3 (MM1_notification.REQ) gemäß Fall 2.**

| **Informationselement** | **Anwesenheit** | **Beschreibung** |
|---|---|---|
| "Reply-Charging-Support-At-Recipient-MMSE" | Optional | Information, dass die Antwortvergebührung-Funktionalität vom empfangsseitigen Netzwerkelement unterstützt wird. |
| ... | ... | ... |
| "Reply-Charging-Size" | Optional | Im Falle der Antwortvergebührung die maximale Größe einer Antwort-MM, die dem Empfänger zugestanden wird. |

**Tab. 6: Zusätzliche Informationselemente in der Abstrakten Nachricht N6 (MM1_retrieve.RES) gemäß Fall 2.**

| **Informationselement** | **Anwesenheit** | **Beschreibung** |
|---|---|---|
| "Reply-Charging-Support-At-Recipient-MMSE" | Optional | Information, dass die Antwortvergebührung-Funktionalität vom empfangsseitigen Netzwerkelement unterstützt wird. |
| ... | ... | ... |
| "Reply-Charging-Size" | Optional | Im Falle der Antwortvergebührung die maximale Größe einer Antwort-MM, die dem Empfänger zugestanden wird. |

Analog zu der im Fall 1 beschriebenen Vorgehensweise wird vorteilhafterweise das hier eingeführte Informationselement "Reply-Charging-Support-At-Originator-MMSE" auch in die Abstrakte Nachricht N2 (*MM1_submit.RES*), mit welcher der korrekte Empfang einer MM von einem Netzwerkelement RS bestätigt wird, eingefügt. Dies erhöht den Komfort der Antwortvergebührung-Funktionalität deutlich, denn auf diese Weise kann sowohl die Sendeapplikation UAA nach dem Abschicken einer Original-MM mit Antwortvergebührung-Kennung als auch die Empfangsapplikation UAB nach dem Abschicken einer entsprechend gekennzeichneten Antwort-MM (in diesem Fall ist die Empfangsapplikation UAB der "Originator" der Antwort-MM) darüber informiert werden, ob der jeweilige MMS Dienstanbieter die geforderte Antwortvergebührung-Funktionalität unterstützt oder nicht. Tabelle 7 zeigt das zusätzliche Informationselement "Reply-Charging-Support-At-Originator-MMSE" in der Abstrakten Nachricht N2 (*MM1_submit.RES*), das vorzugsweise hinter das Informationselement "Message ID" eingefügt wird.

**Tab. 7: Zusätzliches Informationselement in der Abstrakten Nachricht N2 (MM1_submit.RES) gemäß Fall 2.**

| **Informationselement** | **Anwesenheit** | **Beschreibung** |
|---|---|---|
| "Reply-Charging-Support-At-Originator-MMSE" | Optional | Information, dass die Antwortvergebührung-Funktionalität durch das Netzwerkelement RS unterstützt wird, wenn eine Original-MM oder eine Antwort-MM aufgegeben wurde. |

### III. Umsetzung der Erfindung in WAP

Nach dem bisherigen Stand der Technik ist eine Implementierung von MMS lediglich über WAP (WAP - Wireless Application Protocol) realisierbar. Zur Überbrückung der Luftschnittstelle (in 3GPP: MM1) zwischen einem MMS-tauglichen Endgerät und dem WAP Gateway ist nach 3GPP TS 22.140 Version 4.1.0, Release 4 (s.o.) und WAP-209.102-MMSEncapsulation, 8-February-2001 (Wireless Application Protocol; WAP Multimedia Messaging Service; Message Encapsulation; MMS Draft SCD) die Benutzung des WAP WSP Transfer Protocols (Übertragungsprotokolls) vorgesehen. Deshalb wird im nun folgenden Abschnitt beschrieben, wie die oben zum Zwecke der Antwortvergebührung neu definierten Informationselemente der 3GPP-Abstrakten Nachrichten auf die WAP Nachrichten der WAP Implementierung übertragen werden können. Dabei wird beispielhaft die Ausführungsvariante nach Fall 2 (Antwortvergebührung zwischen zwei MMSEs) umgesetzt, weil sie den allgemeineren Fall wiedergibt und ihr für die Umsetzung in 3GPP und WAP die größeren Chancen einzuräumen sind; denn schließlich entfällt mit ihr die Beschränkung auf nur ein MMSE.

Fig. 4 zeigt ein sogenanntes Transaktionsflussdiagramm in WAP nach heutigem Stand der Technik gemäß WAP-209.102-MMSEncapsulation (s.o.), in dem der Austausch der WAP Nachrichten zwischen den vier beteiligten Instanzen Sendeapplikation 1a (MMS Client A, abgekürzt CA), sendeseitiges Netzwerkelement 5a (MMS Proxy-Relay A, abgekürzt PRA), empfangsseitiges Netzwerkelement 6a (MMS Proxy-Relay B, abgekürzt PRB) und Empfangsapplikation 2a (MMS Client B, abgekürzt CB) bei der Übertragung einer MM dargestellt ist. Die von dieser Erfindungsmeldung betroffenen WAP Nachrichten N1a (*M-Send.req*), N2a (*M-Send.conf*), N3a (*M-Notification.ind*) und N6a (*M-Retrieve.conf*) sind dabei in Fettdruck hervorgehoben. Hierbei entspricht die WAP Nachricht N1a der o.g. Nachricht N1, die WAP Nachricht N2a der o.g. Nachricht N2, usw. Zusätzlich ist die bekannte Nachricht N10a (*M-Delivery.ind*) dargestellt. Als Hinweis sei hier angemerkt, dass die in 3GPP definierten Begriffe MMS User Agent, MMS Relay/Server und MMSE in WAP nicht existieren. Deshalb werden in diesem Abschnitt ausschließlich die Begriffe MMS Client und MMS Proxy-Relay bzw. deren Abkürzungen benutzt, die aber die gleichen Instanzen meinen. Für den 3GPP Begriff MMSE existiert in WAP kein analoger Ausdruck.

Nach WAP-209.102-MMSEncapsulation (s.o.) besteht ein Kopf-Feld in einer WAP Nachricht aus einem Feld-Namen, gefolgt von einem Feld-Wert, der aus mindestens einem Oktett (8-bit-Wort) besteht. Die Zuweisung von hexadezimalen Werten zu den Feld-Namen ist in Tabelle 8 aufgeführt. Derzeit existieren 24 Feld-Namen. Die in dieser Erfindungsmeldung neu definierten Feld-Namen beginnen deshalb bevorzugt bei Nummer 25 (hexadezimal: 0x19). Sie sind in Tabelle 9 dargestellt.

**Tab. 8: Zuweisung der Feld-Namen (nach Stand der Technik).**

| **Name** | **Zugewiesene Nummer** |
|---|---|
| Bcc | 0x01 |
| Cc | 0x02 |
| Content-Location (Inhalt-Ort) | 0x03 |
| Content-Type (Inhaltstyp) | 0x04 |
| Date (Datum) | 0x05 |
| Delivery-Report (Auslieferungsbericht) | 0x06 |
| Delivery-Time (Auslieferungszeit) | 0x07 |
| Expiry (Ablauf) | 0x08 |
| From (Von) | 0x09 |
| Message-Class (Nachrichtenklasse) | 0x0A |
| Message-ID (Nachrichten-Identifikationsnummer) | 0x0B |
| Message-Type (Nachrichtentyp) | 0x0C |
| MMS-Version | 0x0D |
| Message-Size (Nachrichten-Größe) | 0x0E |
| Priority (Priorität) | 0x0F |
| Read-Reply (Lesen-Antworten) | 0x10 |
| Report-Allowed (Bericht zugelassen) | 0x11 |
| Response-Status (Antwortstatus) | 0x12 |
| Response-Text (Antwort-Text) | 0x13 |
| Sender-Visibility (Absender-Sichtbarkeit) | 0x14 |
| Status | 0x15 |
| Subject (Betreff) | 0x16 |
| To (An) | 0x17 |
| Transaction-Id (Übertragungsidentifikationsnummer) | 0x18 |

**Tab. 9: Erfindungsgemäß neu definierte Feld-Namen.**

| **Name** | **Zugewiesene Nummer** |
|---|---|
| Reply-Charging-Support-At-Originator-MMS-Proxy-Relay (Antwortvergebührung-Unterstützung-Beim-Ursprungs-MMS-Proxy-Relay) | 0x19 |
| Reply-Charging-Support-At-Recipient-MMS-Proxy-Relay (Antwortvergebührung-Unterstützung-Beim-Empfangs-MMS-Proxy-Relay) | 0x1A |
| Reply-Charging-Size (Antwortvergebührung-Größe) | 0x1B |

Da nach WAP-209.102-MMSEncapsulation (s.o.) ein Kopf-Feld in einer WAP Nachricht immer aus einem Feld-Namen und aus einem Feld-Wert besteht, muss für jedes der hier neu definierten Kopf-Felder mindestens ein Feld-Wert definiert werden. Dies wird im Folgenden näher erläutert:
Es existieren insgesamt vier Möglichkeiten, den Feld-Wert eines Kopf-Feldes zu kodieren, wobei das erste Oktett über die Art und Länge der Kodierung entscheidet (siehe Tabelle 10).

**Tab. 10: Die vier Möglichkeiten für die Kodierung des Feld-Wertes (Stand der Technik).**

| **Erstes Oktett des Feld-Wertes** | **Mögliche Kombinationen** | **Anzahl der nachfolgenden Oktette** |
|---|---|---|
| 0...30 | 31 | 0...30 |
| 31 | 1 | > 30 |
| 32...127 (Text) | 96 | > 0 |
| 128...255 | 128 | 0 |

Um die zu übertragenden Datenmengen auf der Luftschnittstelle gering zu halten, stammen die Feld-Werte für die beiden neu definierten Kopf-Felder "Reply-Charging-Support-At-Originator-MMS-Proxy-Relay" und "Reply-Charging-Support-At-Recipient-MMS-Proxy-Relay" bevorzugt ausschließlich aus dem vierten Wertebereich (128 bis 255). Eine mögliche Definition der neuen Kopf-Felder "Reply-Charging-Support-At-Originator-MMS-Proxy-Relay" und "Reply-Charging-Support-At-Recipient-MMS-Proxy-Relay" könnte wie folgt aussehen:

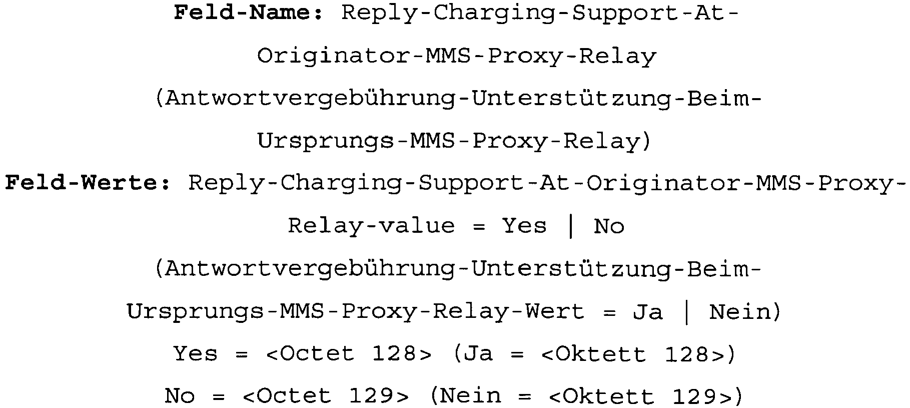

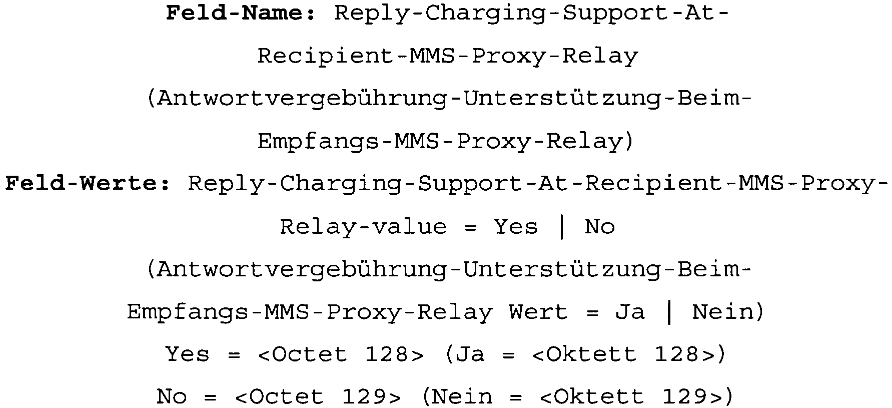

Der Feld-Wert für das neu definierte Kopf-Feld "Reply-Charging-Size" könnte entweder stufenweise (Antwort-MM darf bis zu X, Y oder Z kilo-Byte groß werden) oder konkret (Antwort-MM darf nur X kilo-Byte groß werden) angegeben werden. Eine mögliche Definition des neuen Kopf-Feldes "Reply-Charging-Size" mit einer Abstufung der möglichen Größe einer Antwort-Nachricht könnte wie folgt aussehen (Wertebereich 4):

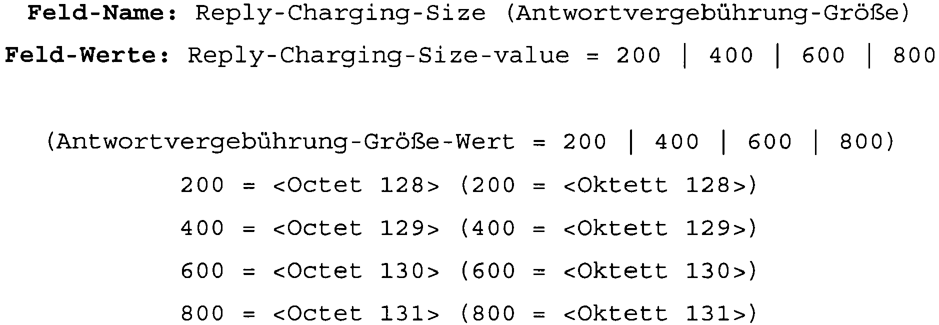

Eine mögliche Definition des neuen Kopf-Feldes "Reply-Charging-Size" mit einer konkreten Angabe der möglichen Größe einer Antwort-Nachricht könnte wie folgt aussehen (Wertebereich 1) :

### Feld-Name: Reply-Charging-Size (Antwortvergebührung-Größe)

### Feld-Wert: Reply-Charging-Size-value = Long-integer (Antwortvergebührung-Größe-Wert)

Auf weitere Kodierungsmöglichkeiten wird an dieser Stelle nicht näher eingegangen. Es ist offensichtlich, dass im Rahmen dieser Erfindung verschiedene Kodierungsmöglichkeiten existieren.

Die erfindungsgemäßen Ergänzungen in den WAP Nachrichten N1a (*M-Send.req*), N2a (*M-Send.conf*), N3a (*M-Notification.ind*) und N6a (*M-Retrieve.conf*) sind in den Tabellen 11 bis 14 dargestellt. Die übrigen zur Realisierung der Antwortvergebührung-Funktionalität innerhalb eines MMSEs notwendigen Kopf-Felder sind dort nicht dargestellt, weil die genaue Umsetzung der in 3GPP definierten Informationselemente im WAP-Forum derzeit noch nicht abgeschlossen ist. In der WAP Nachricht N1a (M-*Send.req*) wurde das Kopf-Feld "Reply-Charging-Size" - vorzugsweise eingefügt hinter das Kopf-Feld "Content-Type" - ergänzt, mit dem die Applikation CA 1a, der die Antwortvergebührung-Funktionalität nutzen möchte, beim Abschicken der MM zusätzlich zur Angabe einer Frist auch die Größe der Antwort-MM beschränken kann.

**Tab. 11: Neu definiertes Kopf-Feld in der WAP Nachricht N1a (M-Send.req).**

| **Name** | **Inhalt** | **Kommentar** |
|---|---|---|
| "X-Mms-Reply-Charging-Size" | Antwortvergebührung-Größe-Wert | Optional. |
| | | Spezifiziert die Größe einer Antwort-MM. |

In der WAP Nachricht N2a (*M-Send.conf*) wurde das Kopf-Feld "Reply-Charging-Support-At-Originator-MMS-Proxy-Relay" - vorzugsweise eingefügt hinter das Kopf-Feld "Message-ID" - ergänzt, mit dem der Sendeapplikation CA 1a, der eine MM abgeschickt hat, mitgeteilt werden kann, ob das entsprechende Netzwerkelement PRA 5a die Bereitschaft des Absenders zur Übernahme der Kosten für eine Antwort-MM oder eine Antwort-MM auf eine zuvor empfangene und entsprechend kennzeichnete Original-MM verstanden/akzeptiert hat.

**Tab. 12: Neu definiertes Kopf-Feld in der WAP Nachricht N2 (M-Send.conf).**

| **Name** | **Inhalt** | **Kommentar** |
|---|---|---|
| "X-Mms-Reply-Charging-Support-At-Originator-MMS-Proxy-Relay" | Antwortvergebührung-Unterstützung-Beim-Ursprungs-MMS-Proxy-Relay-Wert | Optional. |
| | | Hinweis, ob die Antwortvergebührung auf der Sendeseite unterstützt wird. |

Die WAP Nachrichten N3a (*M-Notification.ind*) und N6a (*M-Retrieve.conf*) enthalten (neben der eventuell vorhandenen Information, dass das Netzwerkelement PR 5a des Absenders die Antwortvergebührung-Funktionalität unterstützt) das vom Netzwerkelement PR 6a des Empfängers gesetzte Kopf-Feld "Reply-Charging-Support-At-Recipient-MMS-Proxy-Relay". Für die Empfangsapplikation CB 2a des Empfängers ist aber nur die Existenz oder Abwesenheit des Kopf-Feldes "Reply-Charging-Support-At-Recipient-MMS-Proxy-Relay" von Bedeutung. Dies wird bevorzugt nur dann gesetzt, wenn sowohl das sendeseitige Netzwerkelement PRA 5a als auch das empfangsseitige Netzwerkelement PRB 6a die Antwortvergebührung-Funktionalität unterstützen. Ist es vorhanden, so kann die Empfangsapplikation CB 2a die Gewissheit haben, dass eine Antwort-MM auf eine zuvor empfangene Original-MM von beiden beteiligten MMS Dienstanbietern verstanden wird. Das Kopf-Feld "X-Mms-Reply-Charging-Support-At-Recipient-MMS-Proxy-Relay" ist bei der WAP Nachricht N3a vorzugsweise hinter das bekannte Kopffeld "M-Mms-Content-Location" und bei der WAP Nachricht N6a vorzugsweise hinter das bekannte Kopffeld "Content Type" eingefügt. Das Kopf-Feld "X-Mms-Reply-Charging-Size" ist bei der WAP Nachricht N3a vorzugsweise hinter das bekannte Kopffeld "X-Mms-Expiry" und bei der WAP Nachricht N6a vorzugsweise hinter das bekannte Kopffeld " X-Mms-Read-Reply " eingefügt.

**Tab. 13: Neu definiertes Kopf-Feld in der WAP Nachricht N3a (M-Notification.ind).**

| **Name** | **Inhalt** | **Kommentar** |
|---|---|---|
| "X-Mms-Reply-Charging-Size" | Antwortvergebührung-Größe-Wert | Optional. |
| | | Spezifiziert die Größe einer Antwort-MM. |
| ... | ... | ... |
| "X-Mms-Reply-Charging-Support-At-Recipient-MMS-Proxy-Relay" | Antwortvergebührung-Unterstützung-Beim-Empfangs-MMS-Proxy-Relay-Wert | Optional. |
| | | Hinweis, ob die Antwortvergebührung auf der Empfangsseite unterstützt wird. |

**Tab. 14: Neu definiertes Kopf-Feld in der WAP Nachricht N6a (M-Retrieve.conf).**

| **Name** | **Inhalt** | **Kommentar** |
|---|---|---|
| "X-Mms-Reply-Charging-Size" | Antwortvergebührung-Größe-Wert | Optional. |
| | | Spezifiziert die Größe einer Antwort-MM. |
| ... | ... | ... |
| "X-Mms-Reply-Charging-Support-At-Recipient-MMS-Proxy-Relay" | Antwortvergebührung-Unterstützung-Beim-Empfangs-MMS-Proxy-Relay-Wert | Optional. |
| | | Hinweis, ob die Antwortvergebührung auf der Empfangsseite unterstützt wird. |

Die Erfindung gemäß ihrem ersten Aspekt wurde anhand der Antwortvergebührung-Funktionalität im Detail erläutert, ist aber ebenso für andere durch Mobilfunkteilnehmer angeforderte Funktionalitäten einsetzbar.

Des Weiteren lässt sich die Erfindung nicht nur für multimediale Nachrichten einsetzen, sondern beispielsweise auch entsprechend bei der Versendung bzw. dem Empfang von SMS-Nachrichten.

### Bezugszeichenliste

- 1: Sendeapplikation (MMS User Agent A = UAA)
- 1a: Sendeapplikation (MMS Client A = CA)
- 2: Empfangsapplikation (MMS User Agent B = UAB)
- 2a: Empfangsapplikation (MMS Client B = CB)
- 3: MMS Diensteanbieter (MMS Service Provider A)
- 4: MMS Diensteanbieter (MMS Service Provider B)
- 5: sendeseitige Netzwerkeinheit (MMS Relay Server A = RSA)
- 5a: sendeseitige Netzwerkeinheit (MMS Proxy-Relay A = RPA)
- 6: empfangsseitige Netzwerkeinheit (MMS Relay Server B = RSB)
- 6a: empfangsseitige Netzwerkeinheit (MMS Proxy-Relay B = PRB)
- 7: Funknetzwerk
- 8: Funknetzwerk
- MM1: Schnittstelle
- MM4: Schnittstelle
- N1: Nachricht *MM1_submit.REQ*
- N1a: WAP Nachricht *M-Send.req*
- N2: Nachricht *MM1_submit.RES*
- N2a: WAP Nachricht *M-Send.conf*
- N3: Nachricht *MM1_notification.REQ*
- N3a: WAP Nachricht *M-Notification.ind*
- N4: Nachricht *MM1_notification.RES*
- N4a: WAP Nachricht *M-NotifyResp.req*
- N5: Nachricht MM1_retrieve.REQ
- N5a: WAP Nachricht *WSP GET*
- N6: Nachricht M_retrieve.RES
- N6a: WAP Nachricht *M-Retrieve.conf*
- N7: Nachricht *MM1_acknowledgement.REQ*
- N7a: WAP Nachricht *M-Acknowledge.ind*
- N8: Nachricht *MM4_forward.REQ*
- N9: Nachricht *MM4_forward.RES*
- N10a: WAP Nachricht *M-Delivery.ind*

## Patentansprüche

1. Verfahren für die Reply-Charging Funktionalität bei der Übertragung einer Nachricht, insbesondere einer Multimedia-Nachricht, über ein Kommunikationsnetz von einer Sendeapplikation (MMS User Agent A, MMS Client A) über eine sendeseitige Netzwerkeinheit (MMS Relay/Server A, MMS Proxy-Relay A) und eine empfangsseitige Netzwerkeinheit (MMS Relay/Server B, MMS Proxy-Relay B) an eine Empfangsapplikation (MMS User Agent B, MMS Client B), wobei die sendeseitige Netzwerkeinheit und die empfangsseitige Netzwerkeinheit identisch oder voneinander verschieden sind und im Zuständigkeitsbereich eines oder zweier Diensteanbieter (MMS Service Provider) liegen, und wobei die Nachricht Informationen hinsichtlich der Bereitschaft des Absenders zur Übernahme der Kosten für die Antwort-Nachricht vom Empfänger (Reply-Charging) umfasst,
**dadurch gekennzeichnet,**
**dass** die Sendeapplikation, die sendeseitige Netzwerkeinheit, die empfangsseitige Netzwerkeinheit und/oder die Empfangsapplikation Informationen zur maximal zulässigen Größe der Antwort-Nachricht übermitteln bzw. empfangen.

2. Verfahren nach Anspruch 1,
**dadurch gekennzeichnet,**
**dass** die Informationen zur maximal zulässigen Größe in der Nachricht *MM1_submit.REQ* bzw. *M-Send.req* (in WAP) von der Sendeapplikation an die sendeseitige Netzwerkeinheit mit übermittelt oder von dieser empfangen werden.

3. Verfahren nach Anspruch 1 oder 2,
**dadurch gekennzeichnet,**
**dass** die Informationen zur maximal zulässigen Größe in den Nachrichten *MM1*_*notification.REQ* bzw. *M-Notification.ind* (in WAP) und/oder *MM1*_*retrieve.RES* bzw. *M-Retrieve.conf* (in WAP) von der empfangsseitigen Netzwerkeinheit an die Empfangsapplikation mit übermittelt oder von dieser empfangen werden.

4. Verfahren nach Anspruch 2 oder 3,
**dadurch gekennzeichnet,**
**dass** in den WAP-Nachrichten *M-Send.req, M-Notification.ind* und/oder *M-Retrieve.conf* ein neues Kopffeld ("Reply-Charging-Size") mit hexadezimaler Codierung des Feld-Namens verwendet wird, dessen Feld-Werte bevorzugt einen von mehreren möglichen, abgestuften Maximalwerten oder einen vom Absender gewählten konkreten Wert für die zulässige Größe der Antwort-Nachricht umfassen.

5. Netzwerkeinheit (MMS Relay/Server, MMS Proxy-Relay) zur Durchführung der Reply-Charging Funktionalität bei der Übertragung einer Nachricht, insbesondere einer Multimedia-Nachricht, über ein Kommunikationsnetz gemäß dem Verfahren nach einem der Ansprüche 1 bis 4.

6. Teilnehmergerät zur Durchführung der Reply-Charging Funktionalität bei der Übertragung einer Nachricht, insbesondere einer Multimedia-Nachricht, über ein Kommunikationsnetz gemäß dem Verfahren nach einem der Ansprüche 1 bis 4.

7. Softwareprogramm, welches auf einer Vorrichtung mit einem Prozessor, insbesondere einer Netzwerkeinheit gemäß Anspruch 5 oder einem Teilnehmergerät nach Anspruch 6, derart abläuft, dass das Softwareprogramm mitsamt der Vorrichtung die Reply-Charging Funktionalität bei der Übertragung einer Nachricht, insbesondere einer Multimedia-Nachricht, über ein Kommunikationsnetz auf der Seite der Vorrichtung gemäß dem Verfahren nach einem der Ansprüche 1 bis 4 durchführt.

8. Softwareprogramm, welches in eine Vorrichtung mit einem Prozessor, insbesondere einer Netzwerkeinheit gemäß Anspruch 5 oder einem Teilnehmergerät nach Anspruch 6, ladbar ist, so dass die derart programmierte Vorrichtung einschließlich des Prozessors fähig oder angepasst ist, die Reply-Charging Funktionalität bei der Übertragung einer Nachricht, insbesondere einer Multimedia-Nachricht, über ein Kommunikationsnetz gemäß dem Verfahren nach einem der Ansprüche 1 bis 4 durchzuführen.

## Claims

1. Method for the Reply-Charging functionality when transmitting a message, in particular a multimedia message, via a communications network from a transmitting application (MMS User Agent A, MMS Client A) to a receiving application (MMS User Agent B, MMS Client B) using an originator network unit (MMS Relay/Server A, MMS Proxy-Relay A) and a recipient network unit (MMS Relay/Server B, MMS Proxy-Relay B), the originator network unit and the recipient network unit being identical or different than one another and being situated in the domain of one or two service providers (MMS Service Provider), and the message containing information regarding the readiness of the originator to accept the costs for the reply message from the recipient (Reply-Charging),
**characterized**
**in that** the transmitting application, the originator network unit, the recipient network unit and/or the receiving application transmit and receive information about the maximum permissible size of the reply message.

2. Method according to Claim 1,
**characterized**
**in that** the information regarding the maximum permissible size is concomitantly transmitted to or received from the originator network unit in the message *MM1_submit.REQ* or *M-Send.req* (in WAP) by the transmitting application.

3. Method according to Claim 1 or 2,
**characterized**
**in that** the information regarding the maximum permissible size is concomitantly transmitted to or received from the receiving application in the messages *MM1_notification.REQ* and *M-Notification*.*ind* (in WAP) and/or *MM1*_*retrieve.RES* and *M-Retrieve.conf* (in WAP) by the recipient network unit.

4. Method according to Claim 2 or 3,
**characterized**
**in that** a new header field ("Reply-Charging-Size") with hexadecimal coding of the field name is used in the WAP messages *M-Send.req, M-Notification.ind* and/or *M-Retrieve.conf,* the field values of said field name preferably comprising one of a plurality of possible, gradated maximum values or a specific value chosen by the originator for the permissible size of the reply message.

5. Network unit (MMS Relay/Server, MMS Proxy-Relay) for carrying out the Reply-Charging functionality when transmitting a message, in particular a multimedia message, via a communications network by the method according to one of Claims 1 to 4.

6. Subscriber unit for carrying out the Reply-Charging functionality when transmitting a message, in particular a multimedia message, via a communications network by the method according to one of Claims 1 to 4.

7. Software program which runs on an apparatus having a processor, in particular a network unit according to Claim 5 or a subscriber unit according to Claim 6, such that the software program and the apparatus together carry out the Reply-Charging functionality when transmitting a message, in particular a multimedia message, via a communications network on the apparatus by the method according to one of Claims 1 to 4.

8. Software program which can be loaded into an apparatus having a processor, in particular a network unit according to Claim 5 or a subscriber unit according to Claim 6, so that the apparatus programmed in this way, including the processor, is able or has been adjusted to carry out the Reply-Charging functionality when transmitting a message, in particular a multimedia message, via a communications network by the method according to one of Claims 1 to 4.

## Revendications

1. Procédé pour fournir une fonctionnalité de Reply-Charging lors de la transmission d'un message, notamment d'un message multimédia, par l'intermédiaire d'un réseau de communication depuis une application émettrice (MMS User Agent A, MMS client A), via une unité de réseau côté émetteur (MMS Relay/Server A, MMS Proxy/Relay A) et une unité de réseau côté récepteur (MMS Relay/Server B, MMS Proxy/Relay B) à une application réceptrice (MMS User Agent B, MMS client B), selon lequel l'unité de réseau côté émetteur et l'unité de réseau côté récepteur sont identiques ou différentes l'une de l'autre et sont situées dans la zone de compétence d'un ou de deux fournisseurs de service (MMS Service Provider), et le message contient des informations concernant la disponibilité de l'expéditeur à prendre en charge les frais du message de réponse du récepteur (reply charging),
**caractérisé en ce que** l'application émettrice, l'unité de réseau côté émetteur, l'unité de réseau côté récepteur et/ou l'application réceptrice transmettent ou reçoivent des informations relatives à la taille maximale admissible du message de réponse.

2. Procédé selon la revendication 1, **caractérisé en ce que** les informations relatives à la taille maximale admissible sont transmises en même temps dans le message *MM1_submit.REQ* ou *M-Send.req (dans le WAP)* par l'application émettrice à l'unité de réseau côté émetteur ou reçues par celle-ci.

3. Procédé selon la revendication 1 ou 2, **caractérisé en ce que** les informations relatives à la taille maximale admissible sont transmises en même temps dans les messages *MM1_notification.REQ* ou *M-Notification.ind (dans le WAP)* et/ou *MM1*_*retrieve.RES* ou *M-retrieve.conf (dans le WAP)* par l'unité de réseau côté récepteur à l'application côté récepteur ou reçues par celle-ci.

4. Procédé selon la revendication 2 ou 3, **caractérisé en ce que**, dans les messages WAP *M-Send.req, M-Notification.ind* et/ou *M-Retrieve.conf,* un nouveau champ d'entête (« Reply-Charging-Size ») avec un codage hexadécimal est utilisé, dont les valeurs de champ contiennent de préférence une de plusieurs valeurs maximales échelonnées possibles ou une valeur spécifique sélectionnée par l'expéditeur de la taille maximale du message de réponse.

5. Unité de réseau (MMS Relay/Server, MMS Proxy/Relay) permettant d'exécuter la fonctionnalité de reply-charging lors de la transmission d'un message, notamment d'un message multimédia via un réseau de communication selon le procédé selon l'une des revendications 1 à 4.

6. Appareil d'utilisateur permettant d'exécuter la fonctionnalité de reply-charging lors de la transmission d'un message, notamment d'un message multimédia via un réseau de communication selon le procédé selon l'une des revendications 1 à 4.

7. Programme logiciel, qui s'exécute sur un dispositif doté d'un processeur, notamment sur une unité de réseau selon la revendication 5 ou sur un appareil d'utilisateur selon la revendication 6, de telle sorte que le programme logiciel avec le dispositif exécute la fonctionnalité de reply-charging lors de la transmission d'un message, notamment d'un message multimédia, via un réseau de communication du côté du dispositif selon le procédé selon l'une des revendications 1 à 4.

8. Programme logiciel, qui peut être chargé dans un dispositif doté d'un processeur, notamment dans une unité de réseau selon la revendication 5 ou dans un appareil d'utilisateur selon la revendication 6, de telle sorte que le dispositif programmé par ce moyen y compris le processeur est capable ou est adapté pour exécuter la fonctionnalité de reply-charging lors de la transmission d'un message, notamment d'un message multimédia, via un réseau de communication selon le procédé selon l'une des revendications 1 à 4.
